Europäisches Patentamt

**European Patent Office**

**Office européen des brevets**

(19)

(11) Publication number: **0 173 825**

**A1**

(12) # EUROPEAN PATENT APPLICATION

(21) Application number: **85108728.8**

(22) Date of filing: **12.07.85**

(51) Int. Cl.⁴: **A62C 23/08** , G01L 27/00

(30) Priority: **16.07.84 IT 1256584**

(43) Date of publication of application:
**12.03.86 Bulletin 86/11**

(84) Designated Contracting States:
**AT BE CH DE FR GB LI NL**

(71) Applicant: **G.S.D. Sports Equipments s.r.l.**
**Via Molino Nuovo 55**
**I-16030 Avegno (Genova)(IT)**

(72) Inventor: **Stradella, Giuseppe**
**Piazza San Giovanni Bono 39/12**
**I-16036 Recco (Genova)(IT)**

(74) Representative: **Sandmair, Kurt, Dr. Dr. et al**
**Patentanwälte Dr. Berg Dipl.-Ing. Stapf Dipl.-Ing.**
**Schwabe Dr. Dr. Sandmair Postfach 86 02 45 Stunt-**
**zstrasse 16**
**D-8000 München 86(DE)**

(54) **Improvements in the pressure-gauges for fire-extinguishers, permitting to check the efficiency of said extinguishers.**

(57) Improvemente in the pressure-gauges for fire-extinguishers and the like, more particularly in the pressure-gauges of the axial movement type, comprising a calibrated coil spring (B) and a sensitive plunger (A) submitted to the pressure existing in the container, said improvements comprising the provision of a thin rod or stem (7) axially arranged through the pressure-gauge to engage said plunger and including a pushbutton (6) on the outer end thereof, and the provision of an indicating pointer (3) having a gooseneck formation permitting said pointer to move past the center of the pressure-gauge without interferring with said rod, the arrangement being such that, when a check of efficiency is desired, said pushbutton of the thin rod is just to be depressed, whereby said calibrated spring is temporarily put out of service, thus permitting the pointer of the gauge to move back to the zero position; thereafter, when the depressing action against the pushbutton is discontinued, said pointer should resume the original position.

FIG.2

## TITLE OF THE INVENTION

Improvements in the pressure-gauges for fire-extinguishers, permitting to check the efficiency of said extinguishers.

### BACKGROUND OF THE INVENTION

This invention relates to improvements in the pressure-gauges for fire-extinguishers, which permit to check or test the efficiency of said extinguishers as required by the present regulations in the art. These regulations, issued by the EEC (European Economic Community), require a regular periodical check of the operating efficiency of fire-extinguishers; therefore, the manufacturers in this field have endeavoured to develop a method of ascertaining the correct operation of a pressure gauge without discharging the pressure from the fire-extinguisher. To this end, it was proposed a system involving the removal, by breakage, of the transparent disc or glass that covers the dial of a pressure gauge, and the introduction of a pointed tool adapted to act against the diaphragm through a suitable bore formed purposely in the dial. By depressing said tool and, therefore, said diaphragm, the indicating pointer should move back, and then it should advance again to the previous position when said tool is withdrawn. In fact, said diaphragm, if no longer depressed and if the proper pressure exists in the extinguisher, should resume the position it had before said check was effected. If this is the case, the fire extinguisher is operatively okay. This is an acceptable solution, but the trouble is that, upon each test, a transparent glass of the pressure gauge is to be broken and then replaced with a new one, which requires comparatively complicated special-purpose tools, not always available. Pressure-gauges for fire-extinguishers have also been produced which are not provided with said diaphragm and which comprise a calibrated coil spring arranged axially in the gauge and compressed through an axially-movable plunger. In these gauges, the mechanism comprises a system for converting the axial movement into a rotary movement for the actuation of the indicating pointer. These gauges operate with no problem, but their manufacturing cost is somewhat high.

### SUMMARY OF THE INVENTION

In view of the ECC regulations mentioned above, it has become desired to study, in the pressure-gauges of the last-mentioned type, a simplified checking system to be carried out without requiring the previous relieving of pressure. The result of this study has been satisfactory and such as to permit an instantaneous check or test with no preliminary operations and with no tools; therefore, the invention is deemed worthy to be protected.

The solution according to the invention is simple: in the manufacturing step, the gauge of the type mentioned above, having no diaphragm, but comprising a calibrated axial spring is provided with a dial-protecting transparent disc or glass having a small central hole surrounded by a hub and a raised reinforcing rim. These features enable the axial slidable arrangement of a thin rod or stem having an external pushbutton and of such a length as to operate, through the centers of the dial and the underlying calibrated coil spring, against the small plunger responsive to the load of the internal pressure in the fire-extinguisher bottle, whereby said load is eliminated. Therefore, if everything is in order, the indicating pointer should move back to the zero position and, thereafter, move again to the original position as soon as the depression on said pushbutton is discontinued. Since the indicating pointer, having an off-center pivot, must clear unhindered the center of the dial, including now the test rod according to the invention, the invention provides an indicating pointer which instead of the usual rectilinear configuration has a "gooseneck" formation, which permits the pointer to move past the center of the dial without interferring with said test rod, thus permitting a normal operation. The invention may be carried out in a very simple manner and during the normal manufacturing cycle, whereby its cost is very low.

### BRIEF DESCRIPTION OF THE DRAWING

The accompanying drawing shows, as a non-limiting example, a preferred embodiment of the invention. In the drawing:

Fig. 1 is a plan view, on a slightly larger scale, of an axial-movement pressure-gauge with no diaphragm, including the improvements of the invention for readily checking the efficiency of a fire-extinguisher;

Fig. 2 is an axial sectional view of Fig. 1, showing with more detail the improved means of the invention and omitting the means for the actuation of the pointer and for the connection with the fire-extinguisher, since the latter means is known in the art.

### DESCRIPTION OF THE PREFERRED EMBODIMENT

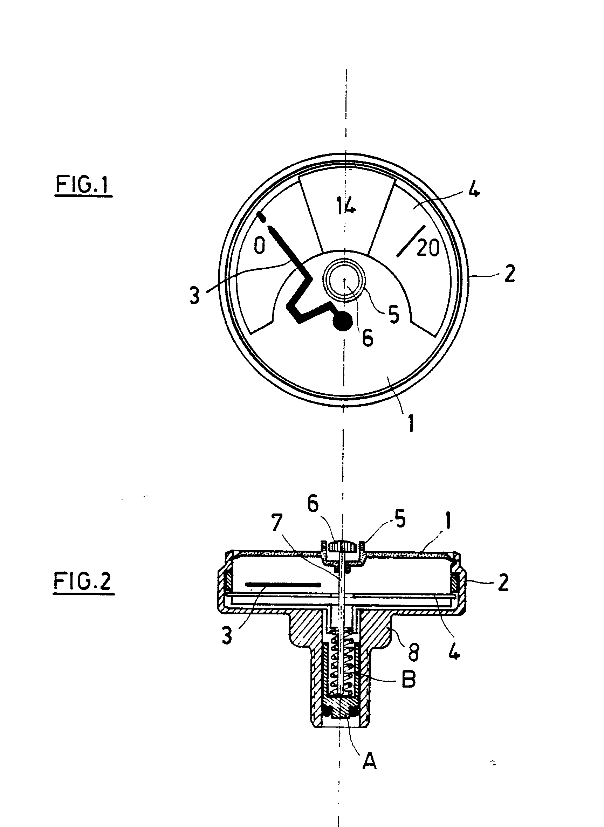

The illustrated embodiment is a pressure-gauge for fire-extinguishers in the range of pressures of 0 to 20 bar, but of course these pressures might be different. This pressure-gauge, as stated above, is of the axial movement type comprising a cup-shaped plunger A provided with a sealing O-ring which is subject to the pressure in the bottle and a calibrated spring B substituting for the usual diaphragm or Bourdon spring. As illustrated clearly in the Figures, the details of the improve ments according to the invention are only the transparent discshaped member 1 engaged conventionally on the circular body 2 of the pressure gauge, the indicating pointer 3 and the dial 4. The disc-shaped member 1, as best shown in the sectional view of Fig. 2, is formed with a central seat having a circular raised rim 5 and accommodating a pushbutton 6 which is fixed on the top end of a thin rod 7 which is slidably movable through the centers of the transparent disc-shaped member 1 and dial 4 to reach, through the hub 8 of the gauge and the calibrated spring B, the head of the sensitive plunger A and act thereagainst when depressed. The other improvement concerns the indicating pointer 3 which, as best shown in Fig. 1, has a gooseneck formation so as to permit the pointer to move past the center of the dial without interferring with the rod 7. When a test of efficiency is to be carried out, one shall just depress the pushbutton 6, observe whether the pointer 3 moves back to the zero position, release the pushbutton and finally ascertain whether the pointer 3 moves again to the position it had previously. The test of efficiency is thus completed, with the advantages of requiring no special auxiliary tool and of permitting, if desired, to repeat the test at any moment with no preliminary operation.

Obviously, on the basis of the same inventive principles, said improvements may also be applied, still within the scope of the invention, to other types of pressure gauges, such as the diaphragm or the Bourdon spring types. In these instances, the test rod may be arranged radially or in any other position to engage either the diaphragm or the Bourdon spring interiorly so as to act thereon and cause the zero setting of the indicating pointer, and all within the basic principles of the invention and liable to further changes and improvements.

## Claims

1- In a pressure gauge for fire-extinguishers, the inprovements permitting to check the efficiency of the extinguishers, particularly designed for application on the conventional, axial-type pressure-gauges comprising a calibrated coil spring and a small plunger which is submitted to the pressure in the container, said improvements being characterized in that the transparent disc covering the dial is formed with a central seat having a circular raised rim for accommodating a pushbutton which is fixed to an end of an axially-movable thin rod or stem which is passed through the center of the pressure-gauge to reach the top end of the corresponding sensitive plunger, while the indicating pointer has a gooseneck formation whereby it can move past the center of the pressure gauge without interferring with said rod, the arrangement being such as to permit a test of efficiency by a simple depression on said pushbutton.

2- The improvements of claim 1, characterized in that they include means incorporated in a pressure gauge and adapted to temporarily disactivate, if a check is to be effected, the sensitive means of said pressure-gauge to thus ascertain whether the indicating pointer operates unhindered.

3- The improvements of claim 1, characterized in that they comprise, as a modification based on the same principle, a control and test means arranged on the body of the pressure-gauge in a radial or any other position such as to temporarily put out of service, if desired, a diaphragm, a Bourdon spring or any other sensitive member comprised in the movement of a pressure-gauge.

FIG.1

14

4

0

20

3

2

5

6

1

FIG.2

6

7

5

1

2

3

8

4

B

A

**European Patent Office**

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | DE-A-2 443 991 (BURKARD)<br>* claim 1 * | 1 | A 62 C 23/08<br>G 01 L 27/00 |
| A | GB-A-1 391 417 (W.H. BRAMALL & CO. LTD.) | | |
| A | GB-A-1 303 169 (CHUBB FIRE SECURITY LTD.) | | |

TECHNICAL FIELDS SEARCHED (Int. Cl.4)

A 62 C 23/00
G 01 L 27/00

The present search report has been drawn up for all claims

| Place of search | Date of completion of the search | Examiner |
|---|---|---|
| BERLIN | 15-11-1985 | KANAL P K |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82